Europäisches Patentamt

European Patent Office

Office européen des brevets

(19)

(11) Veröffentlichungsnummer: **0 073 035**

**A2**

(12)

# EUROPÄISCHE PATENTANMELDUNG

(21) Anmeldenummer: **82107640.3**

(22) Anmeldetag: **20.08.82**

(51) Int. Cl.³: **G 12 B 11/00**
**G 01 D 11/28**

(30) Priorität: **21.08.81 DE 3133161**

(43) Veröffentlichungstag der Anmeldung:
**02.03.83 Patentblatt 83 9**

(84) Benannte Vertragsstaaten:
**BE DE FR GB IT**

(71) Anmelder: **Patent-Treuhand-Gesellschaft für**
**elektrische Glühlampen mbH**
**Hellabrunner Strasse 1**
**D-8000 München 90(DE)**

(72) Erfinder: **Eckhardt, Fritz**
**Ahornweg 6**
**D-7921 Dettingen(DE)**

(72) Erfinder: **Helbig, Peter**
**Heinrich-Röhm-Strasse 31**
**D-7927 Sontheim Brenz(DE)**

(72) Erfinder: **Schönherr, Walter**
**Bergstrasse 25**
**D-7928 Giengen-Hürben(DE)**

(54) **Leuchte zur Beleuchtung einer Anzeigeeinrichtung.**

(57) Flache Leuchte zur Beleuchtung einer Anzeigeeinrichtung, bestehend aus einer scheibenförmigen Sockelplatte (2), auf der ein annähernd zylindrischer Aufsatz (3, 15) angeformt ist mit Aussparungen (6, 17, 19) zur Aufnahme der Sockelkontakte (8, 18) und einer vertikal zur Einbaurichtung der Leuchte angeordneten Halogenglühlampe (12).

FIG 1a

Croydon Printing Company Ltd.

Patent-Treuhand-Gesellschaft
für elektrische Glühlampen mbH., München

## Leuchte zur Beleuchtung einer Anzeigeeinrichtung

Die Erfindung betrifft eine Leuchte zur Beleuchtung einer Anzeigeeinrichtung, bestehend aus einer Halogenglühlampe kleiner Leistung mit an ihrem Glasquetschfußende herausgeführten Stromzuführungen und einem Sockelteil, dem Nasen zum bajonettartigen Einbau der Leuchte in eine geeignete Aufnahmeöffnung an der Anzeigeeinrichtung angeformt sind. Das Sockelteil weist zwei Sockelkontakte auf, an deren eine Enden die Stromzuführungen der Lampe angeschweißt sind und deren andere Enden federnd an der Außenseite der Anzeigeeinrichtung anliegen.

Anzeigeleuchten, bei denen die Stromzuführungen der Lampe an die Sockelkontakte angeschweißt und die zum bajonettartigen Einbau in elektrische Geräte bestimmt sind, sind aus der Patentliteratur bereits bekannt und befinden sich derzeit in vielen Variationen auf dem Markt. Derartige Leuchten bestehen in den meisten Fällen aus einem zylinderförmigen Kunststoffsockel, in den in axialer Richtung die Lampe eingesteckt ist. Zum leichteren Einbau der Leuchte in ein elektrisches Gerät ist am unteren Ende des Kunststoffsockels ein Griffteil angeformt. Diese bekannten Anzeigeleuchten sind in ihrer Bauhöhe recht hoch und können somit nicht in jedes beliebige elektrische Gerät eingesetzt werden.

Der Erfindung liegt die Aufgabe zugrunde, eine Leuchte zur gleichmäßigen und intensiven Beleuchtung von Anzeigeeinrichtungen zu schaffen, die eine geringe Bau-

höhe aufweist, einfach herzustellen und leicht in ihrer Handhabung ist.

Diese Aufgabe wird erfindungsgemäß dadurch gelöst, daß das Sockelteil der Leuchte aus einer scheibenförmigen Sockelplatte mit einem niedrigen, annähernd zylinderförmigen Aufsatz besteht, der Aussparungen zur Aufnahme der Sockelkontakte und der Halogenglühlampe aufweist. Die Lampe ist zur Verminderung der Gesamtbauhöhe der Leuchte auf der Sockelplatte vertikal zur Einbaurichtung der Leuchte in die Aufnahmeöffnung an der Anzeigeeinrichtung angeordnet. Um eine gleichmäßige Beleuchtung der Anzeigeeinrichtung zu erreichen, ist die Lampe mit einer Strahlenblende abgeschirmt, so daß nur indirektes Licht auf die Anzeigefläche der Anzeigeeinrichtung fällt.

Es gibt nun mehrere Möglichkeiten, die Sockelkontakte und die Halogenglühlampe auf dem Sockelteil zu befestigen - Einzelheiten dazu gehen aus den Unteransprüchen hervor. Zwei Ausführungsbeispiele von Anzeigeleuchten sind in Zeichnungen dargestellt und werden im folgenden näher beschrieben.

Es zeigen:

Figur 1a die Seitenansicht der Leuchte in einer ersten Ausführungsform;

Figur 1b die Draufsicht der Leuchte nach Figur 1a;

Figur 1c einer der Sockelkontakte der Leuchte nach Figur 1a, 1b;

Figur 1d der andere der Sockelkontakte der Leuchte nach Figur 1a, 1b;

Figur 2a die Seitenansicht des Sockelteils der Leuchte in einer zweiten Ausführungsform;

Figur 2b die Draufsicht des Sockelteils der Leuchte nach Figur 2a;

Figur 2c einer der beiden identischen Sockelkontakte der Leuchte nach Figur 2a, 2b;

Figur 2d der Lampenträger der Leuchte nach Figur 2a, 2b;

Figur 2e die Seitenansicht der Leuchte in der zweiten Ausführungsform;

Figur 2f die Draufsicht der Leuchte nach Figur 2e;

Figur 3 die entsprechende Aufnahmeöffnung an der Anzeigeeinrichtung für die Leuchten.

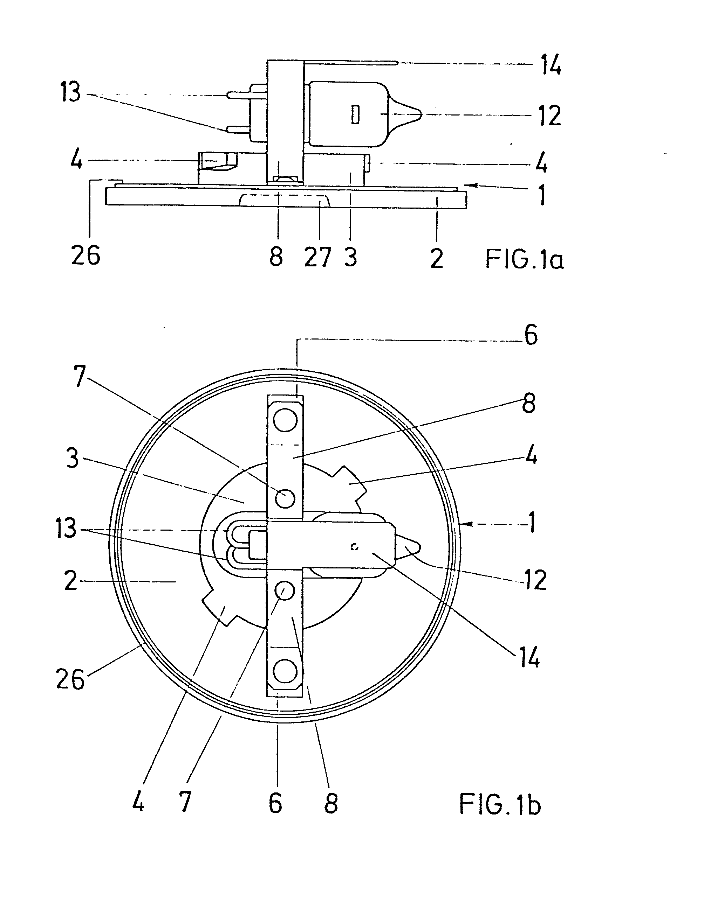

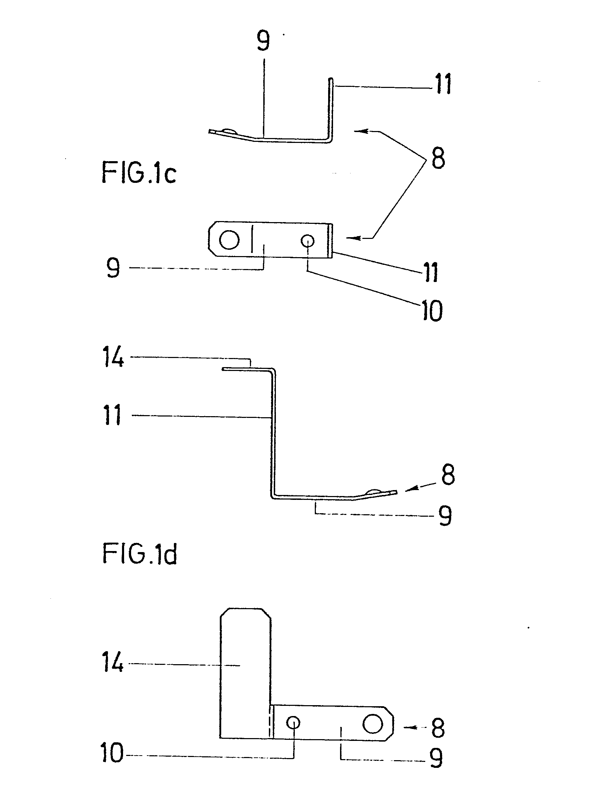

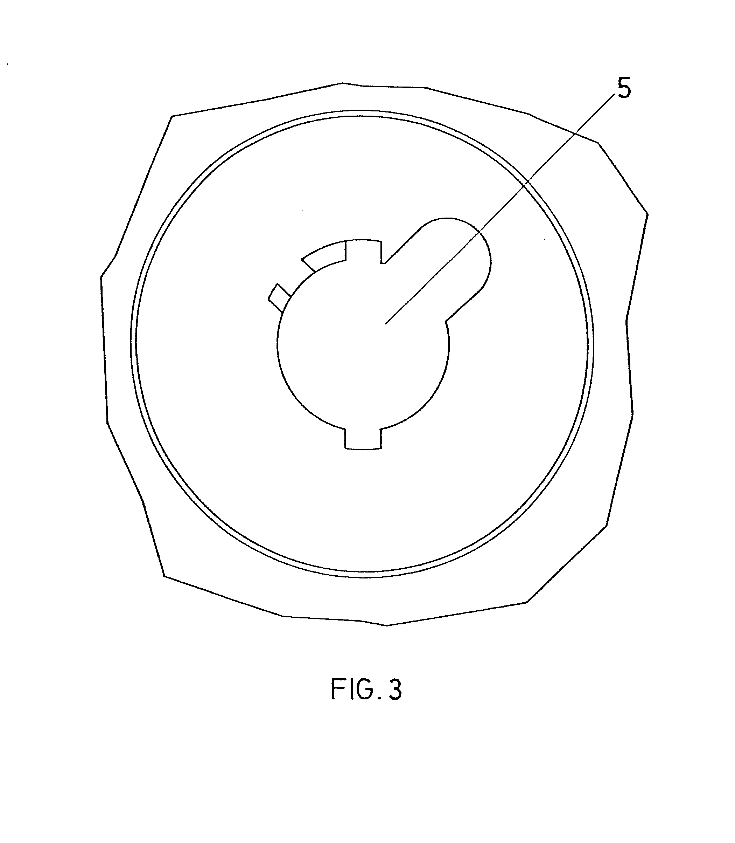

Die in den Figuren 1a - 2f dargestellten Leuchten bestehen aus einem Sockelteil 1, das vorzugsweise aus einem thermoplastischen Kunststoffmaterial geformt ist. Dieses Sockelteil 1 ist aus einer scheibenförmigen Sockelplatte 2 und einem daran angeformten, niedrigen, annähernd zylinderförmigen Aufsatz 3 gebildet. An der äußeren Mantelfläche des Aufsatzes 3 sind Nasen 4 angeformt, mittels denen die Leuchte in einer entsprechend geformten Aufnahmeöffnung 5 an der Anzeigeeinrichtung (siehe beispielsweise Figur 3) bajonettartig befestigt werden kann.

Quer durch den Aufsatz 3 verläuft im ersten Ausführungsbeispiel der Leuchte (s. Fig. 1a, b) eine Nut 6, von deren Bodenfläche zwei Nippel 7 abstehen. Die Nippel 7 dienen zur Befestigung der Sockelkontakte 8.

Die Sockelkontakte 8 (Fig. 1c, d) bestehen aus annähernd L-förmig gebogenen Metallstreifen, deren Breite der der Nut 6 entspricht. In dem einen Schenkel 9 der Sockelkontakte 8 ist eine Öffnung 10 vorgesehen, mittels der die Sockelkontakte 8 in der Nut 6 über die Nippel 7 gesteckt sind. Durch Ultraschallverschweißen der Nippel 7 sind die Sockelkontakte 8 auf dem Sockelteil 1 befestigt.

Die Enden dieser einen Schenkel 9 der Sockelkontakte 8 sind etwas nach oben abgewinkelt und weisen eine Nocke oder eine geprägte Erhebung auf, so daß diese Enden bei eingebauter Leuchte federnd an der Außenseite der Anzeigeeinrichtung anliegen.

Die anderen Schenkel 11 der L-förmig gebogenen Sockelkontakte 8 stehen senkrecht zur Sockelplatte 2. Diese Schenkel 11 stehen parallel zueinander und haben einen lichten Abstand, der der Dicke des Glasquetschfußes der Lampe 12 entspricht.

Die Lampe 12 ist mit ihrem Glasquetschfuß zwischen die beiden kurzen Schenkel 11 der Sockelkontakte 8 gesteckt und wird dort leicht klemmend festgehalten. Hauptsächlich gehalten wird die Lampe 12 jedoch durch ihre an den Sockelkontakten 8 angeschweißten Stromzuführungen 13.

Zur gleichmäßigen Ausleuchtung der Anzeigeeinrichtung muß vermieden werden, daß direktes Licht auf die Anzeigefläche der Anzeigeeinrichtung fällt. Aus diesem Grund ist vorgesehen, zwischen Lampe 12 und Anzeigefläche eine Strahlenblende 14 anzuordnen. In dem in den Figuren 1a - d dargestellten Ausführungsbeispiel ist die Strahlenblende 14 an einem der Sockelkontakte 8 angeformt bzw. besteht zusammen mit diesem aus einem Zuschnitt.

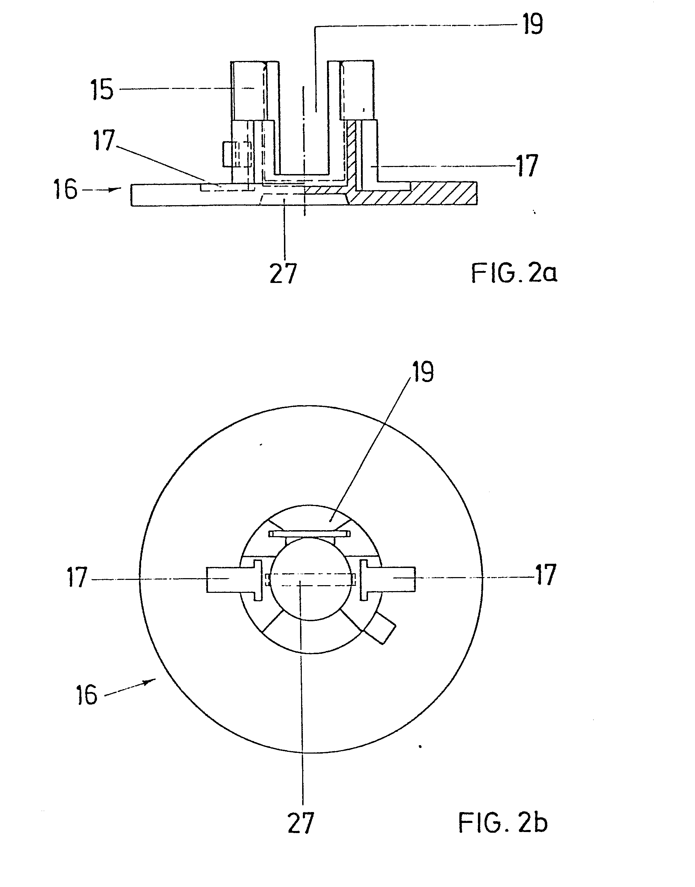

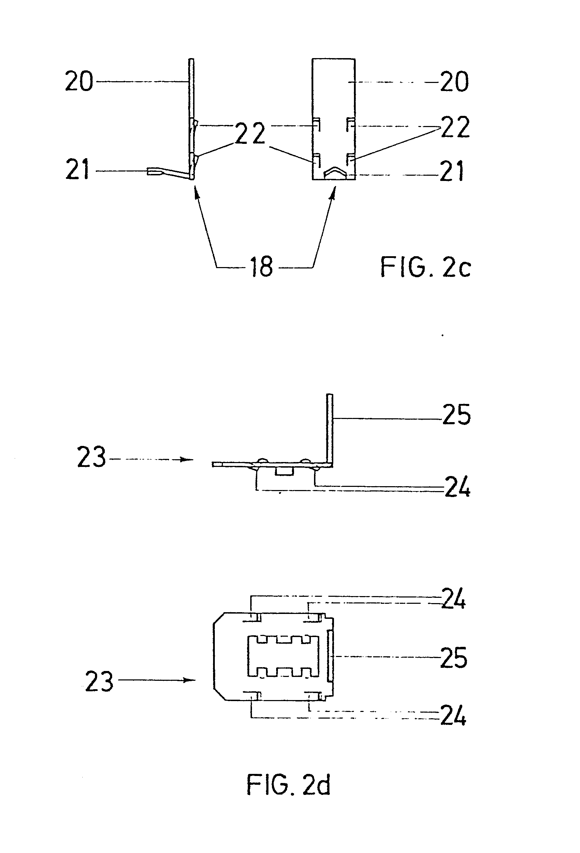

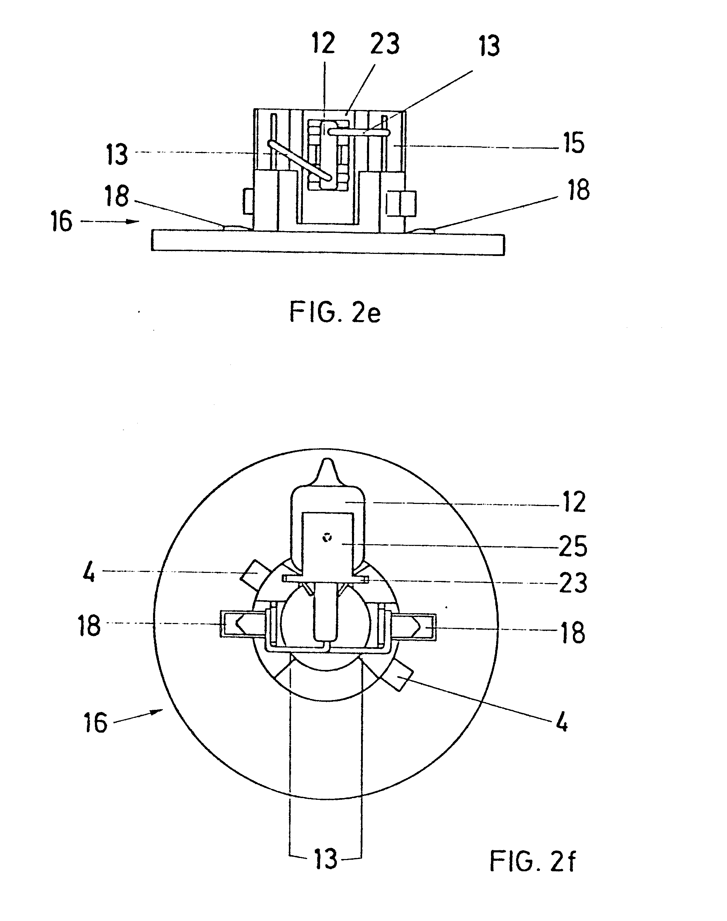

Bei dem zweiten Ausführungsbeispiel der Leuchte
(Figuren 2a - f) ist der Aufsatz 15 des Sockelteils 16
etwas höher ausgebildet als der Aufsatz 3 vom ersten
Ausführungsbeispiel. In diesem Aufsatz 15 sind Aussparungen 17 zur Aufnahme der Sockelkontakte 18 und eine
Aussparung 19 zur Befestigung der Lampe 12 vorgesehen.

Die Sockelkontakte 18 sind zwei identische, L-förmig
gebogene Metallstreifen mit einem langen und einem
kurzen Schenkel 20, 21 (Figur 2c). Der lange Schenkel 20
ist breiter ausgebildet als der kurze Schenkel 21 und
weist an seinem Rand herausgebogene Zungen 22 auf,
mittels denen die Sockelkontakte 18 in den Aussparungen
17 verrastet sind.

Die Lampe 12 ist klemmend in einem Lampenträger 23 aus
Metallblech eingesetzt. Dieser Lampenträger 23 weist an
seinem Rand, wie die Sockelkontakte 18, herausgebogene
Zungen 24 auf, mittels denen er zusammen mit der Lampe
12 in der Aussparung 19 befestigt ist. Zur Abschirmung
von direktem Licht zur Anzeigefläche der Anzeigeeinrichtung hin, ist der Lampe 12 in diesem Ausführungsbeispiel einer Leuchte auch eine Strahlenblende 25 zugeordnet. Diese Strahlenblende 25 ist am Lampenträger 23
angeformt bzw. besteht mit diesem aus einem Zuschnitt.

Durch Anformen einer Ringwulst 26 auf der Oberseite der
Sockelplatte 2, die bei eingebauter Leuchte gegen die
Außenseite der Anzeigeeinrichtung gepreßt ist, ist die
Anzeigeeinrichtung gegen Staub- und Feuchtigkeitseindringen geschützt. Die Ringwulst kann jedoch auch an
der Außenseite der Anzeigeeinrichtung angeformt sein.
Eine weitere Möglichkeit, die Anzeigeeinrichtung an der Aufnahmeöffnung 5 abzudichten, besteht darin, die Aufnahmeöffnung 5 an der Anzeigeeinrichtung versenkt anzubringen und den Rand der Versenkung und den Rand der Sockelplatte so abzuschrägen, daß bei eingebauter Leuchte zwischen beiden Teilen ein Formschluß entsteht.

Zum vereinfachten Einbau der Leuchte in die Aufnahmeöffnung 5 an der Anzeigeeinrichtung ist auf der Unterseite der Sockelplatte ein Schlitz 27 vorgesehen, um die Leuchte mittels eines Schraubenziehers, einer Münze o.ä. in der Aufnahmeöffnung 5 bajonettartig zu verriegeln.

Ade/Mg

Patentansprüche

1. Leuchte zur Beleuchtung einer Anzeigeeinrichtung, bestehend aus einer Halogenglühlampe kleiner Leistung mit an ihrem Glasquetschfußende herausgeführten Stromzuführungen und einem Sockelteil, dem Nasen angeformt sind zum bajonettartigen Einbau der Leuchte in eine geeignete Aufnahmeöffnung an der Anzeigeeinrichtung, und das zwei Sockelkontakte aufweist, an deren eine Enden die Stromzuführungen angeschweißt sind und deren andere Enden federnd an der Außenseite der Anzeigeeinrichtung anliegen, dadurch gekennzeichnet, daß das Sockelteil (1, 16) der Leuchte aus einer scheibenförmigen Sockelplatte (2) besteht mit einem niedrigen, annähernd zylinderförmigen Aufsatz (3, 15), der Aussparungen (6, 17, 19) zur Aufnahme der Sockelkontakte (8, 18) und der Halogenglühlampe (12) aufweist.

2. Leuchte nach Anspruch 1, dadurch gekennzeichnet, daß die Halogenglühlampe (12) auf der Sockelplatte (2) vertikal zur Einbaurichtung der Leuchte in die Aufnahmeöffnung (5) an der Anzeigeeinrichtung angeordnet ist.

3. Leuchte nach Anspruch 1 und 2, dadurch gekennzeichnet, daß die Sockelkontakte (8, 18) im wesentlichen L-förmig gebogen sind.

4. Leuchte nach Anspruch 1 bis 3, dadurch gekennzeichnet, daß der eine Schenkel (9) der L-förmig gebogenen Sockelkontakte (8) eine Öffnung (10) aufweist und das Sockelteil (1) in der Aussparung (6) zur Aufnahme der Sockelkontakte (8) angeformte Nippel (7), über die die Sockelkontakte (8) mit ihrer Öffnung (10) gesteckt und mit dem Sockelteil (1) ultraschallverschweißt sind.

5. Leuchte nach Anspruch 1 bis 4, dadurch gekennzeichnet, daß die auf der Sockelplatte (2) angeordnete Lampe (12) mittels ihrer an den Sockelkontakten (8) angeschweißten Stromzuführungen (13) auf dem Sockelteil (1) befestigt ist.

6. Leuchte nach Anspruch 1 bis 3, dadurch gekennzeichnet, daß der Schenkel (20) der L-förmig gebogenen Sockelkontakte (18), an dem die Stromzuführungen (13) der Lampe (12) angeschweißt sind, Zungen (22) aufweist, mittels denen die Sockelkontakte (18) in den Aussparungen (17) verrastet sind.

7. Leuchte nach Anspruch 1 bis 3 und 6, dadurch gekennzeichnet, daß die auf dem Sockelteil (16) angeordnete Lampe (12) mittels eines Lampenträgers (26), der Zungen (24) aufweist und in einer der Aussparungen (19) in dem zylinderförmigen Aufsatz (15) verrastet ist, auf dem Sockelteil (16) befestigt ist.

8. Leuchte nach Anspruch 1 bis 7, dadurch gekennzeichnet, daß die Lampe (12) auf der der Sockelplatte (2) gegenüberliegenden Seite durch eine Strahlenblende (14, 25) abgeschirmt ist.

9. Leuchte nach Anspruch 8, dadurch gekennzeichnet, daß die die Lampe (12) abschirmende Strahlenblende (14) einstückig aus einem der Sockelkontakte (8) geformt ist.

10. Leuchte nach Anspruch 8, dadurch gekennzeichnet, daß die die Lampe (12) abschirmende Strahlenblende (25) einstückig aus dem Lampenträger (23) geformt ist.

11. Leuchte nach Anspruch 1 bis 10, dadurch gekennzeichnet, daß die Sockelplatte (2) auf ihrer Oberseite eine Ringwulst (26) aufweist.

12. Leuchte nach Anspruch 1 bis 10, dadurch gekennzeichnet, daß die Sockelplatte einen angefasten Rand aufweist.

13. Leuchte nach Anspruch 1 bis 12, dadurch gekennzeichnet, daß auf der Unterseite der Sockelplatte ein Schlitz (27) vorgesehen ist.

14. Leuchte nach Anspruch 1 bis 13, dadurch gekennzeichnet, daß das Sockelteil (1, 16) aus thermoplastischem Kunststoffmaterial besteht.

**FIG.1a**

**FIG.1b**

9

11

8

FIG.1c

9

11

10

14

11

8

9

FIG.1d

14

10

8

9

FIG.2a

FIG. 2b

20 —

22

21 —

22

20

22

21

18

**FIG. 2c**

23 —→

25

24

24

23 —→

25

24

**FIG. 2d**

0073035

12    23    13

13

15

18    18

16 →

FIG. 2e

12

25

4

23

18    18

16 →

13

FIG. 2f

FIG. 3